# EUROPEAN PATENT APPLICATION

(11) **EP 4 470 987 A1**
(43) Date of publication of application: **04.12.2024**
(21) Application number: 23775070.8
(22) Date of filing: 24.03.2023
(51) Int. Cl.: C04B 28/02, C04B 22/08, C04B 22/14

(54) **POWDER ACCELERATING AGENT, SLURRY ACCELERATING AGENT, SPRAYING MATERIAL, AND SPRAYING METHOD**

(30) Priority: 25.03.2022 JP 2022049968
(71) Applicant: Denka Company Limited, Tokyo 103-8338 (JP)
(72) Inventor: MUROKAWA, Takamitsu, Tokyo 103-8338 (JP); MIZUNO, Hiroki, Tokyo 103-8338 (JP); IWASAKI, Masahiro, Tokyo 103-8338 (JP)
(74) Representative: Ter Meer Steinmeister & Partner
(86) International application number: PCT/JP2023/011710
(87) International publication number: WO 2023/182477

(57) **Abstract**

A powder quick-setting agent includes: 40% by mass or more of calcium aluminate having a CaO/Al₂O₃ molar ratio of 1.7 to 3.0, a vitrification rate of 50% or more, and a Blaine value of 4,500 cm²/g or more; 3 to 12.5% by mass of aluminum sulfate having a hydration number of 14 to 18, 0.1 to 1.5% by mass of citric acid; and substantially no sodium aluminate.

## Description

### Technical Field

The present invention relates to a powder quick-setting agent, a slurry quick-setting agent, a spraying material and a spraying method.

### Background Art

Conventionally, in order to prevent collapse of a natural ground exposed by tunnel excavation or the like, primary lining is performed with a spraying material such as spraying concrete or spraying mortar, and after the natural ground is stabilized in this state, secondary lining is further performed with ordinary concrete. On the other hand, in a relatively hard natural ground with a small number of cracks in the base rock, there is a case where the secondary lining is not performed and the permanent lining is performed only with the spraying material. In both linings, a certain degree of high strength expression property is required in the very initial stage at 10 minutes after spraying.

For example, PTL 1 discloses a quick-setting agent for providing a mortar or concrete composition having excellent quick-setting property and strength expression property, the quick-setting agent containing predetermined amounts of each of calcium aluminates, anhydrous calcium sulfate, aluminum sulfate, anhydrous citric acid, and sodium aluminate.

### Citation List

### Patent Literature

PTL 1: JP2020-203800A

### Summary of Invention

### Technical Problem

However, since the quick-setting agent described in PTL 1 contains sodium aluminate, there is a case where spraying operation at a site is complicated.

In addition, when a design for enhancing the strength expression property at the very initial stage is performed, the concrete tends to be hardened before the spraying concrete is discharged from the nozzle and adheres to the skeleton. Therefore, it is necessary to control the slump of the concrete before the addition of the quick-setting agent to be high in consideration of the decrease in the adhesion strength. This causes a problem that adhesion control becomes more difficult as the temperature condition becomes higher, and the frequency of quality control of concrete increases.

That is, in order to improve the strength expression property at the very initial stage and to obtain a high adhesive strength without containing a sodium aluminate, the conventional blending design is not necessarily effective.

In view of the above, an object of the present invention is to provide a powder quick-setting agent which has good workability in spraying treatment, exhibits good strength expression property at the very initial stage after spraying (after 10 minutes of material age), and can realize high adhesion strength.

### Solution to Problem

As a result of intensive studies to solve the above problem, the present inventors have arrived at the following present invention and found that the problems can be solved. That is, the present invention is as follows.
[1] A powder quick-setting agent including: 40% by mass or more of calcium aluminate having a CaO/Al₂O₃ molar ratio of 1.7 to 3.0, a vitrification rate of 50% or more, and a Blaine value of 4,500 cm²/g or more; 3 to 12.5% by mass of aluminum sulfate having a hydration number of 14 to 18; 0.1 to 1.5% by mass of citric acid; and substantially no sodium aluminate.
[2] The powder quick-setting agent according to [1], in which a mass ratio of the calcium aluminate to the citric acid (calcium aluminate/citric acid) is 25 to 500, and a mass ratio of the aluminum sulfate to the citric acid (calcium aluminate/citric acid) is 5 to 150.
[3] The powder quick-setting agent according to [1] or [2], further including 20% by mass or more of calcium sulfate.
[4] The powder quick-setting agent according to [3], in which the calcium sulfate has a Blaine value of 4000 cm²/g or more.
[5] The powder quick-setting agent according to any of [1] to [4], which is used together with an acidic liquid quick-setting agent.
[6] A slurry quick-setting agent obtained by combining a liquid quick-setting agent exhibiting pH 1 to 4 and containing aluminum sulfate as a main component and the powder quick-setting agent according to any of [1] to [5].
[7] The slurry quick-setting agent according to [6], which is alkali-free.
[8] A spraying material obtained by using the slurry quick-setting agent according to [6] or [7] together with cement, in which the liquid quick-setting agent is 4 parts by mass or more with respect to 100 parts by mass of the cement.
[9] A spraying material obtained by using the slurry quick-setting agent according to [6] or [7] together with cement, in which the powder quick-setting agent is 4 parts by mass or more with respect to 100 parts by mass of the cement.
[10] The spraying material according to [9], in which the powder quick-setting agent is 10 parts by mass or more with respect to 100 parts by mass of the cement.
[11] A spraying method for performing a spraying treatment using the spray material according to any of [8] to [10].

### Advantageous Effects of Invention

According to the present invention, it is possible to provide a powder quick-setting agent which has good workability in a spraying treatment, exhibits good strength expression property at a very initial stage after spraying (after 10 minutes of material age), and can realize high adhesive strength.

### Description of Embodiments

Hereinafter, an embodiment according to the present invention (hereinafter, also referred to as "the present embodiment") is described.

### [Powder Quick-Setting Agent]

### (Calcium Aluminate)

In the present embodiment, 40% by mass or more of calcium aluminate having a CaO/Al₂O₃ molar ratio of 1.7 to 3.0, a vitrification rate of 50% or more, and a Blaine value of 4,500 cm²/g or more is contained.

When the CaO/Al₂O₃ molar ratio is less than 1.7, the initial strength decreases, and when it exceeds 3.0, the compression strength value per day and the adhesion strength decrease. The CaO/Al₂O₃ molar ratio is preferably 2.3 to 2.8, and more preferably 2.4 to 2.7. The CaO/Al₂O₃ molar ratio can be determined by, for example, fluorescent X-ray analysis.

The vitrification rate of calcium aluminate is 50% or more, preferably 70% or more, and more preferably 80% or more. When the vitrification rate is less than 50%, the strength expression property at the very initial stage and the adhesive strength are decreased. Regarding the vitrification rate, the main peak area S of the crystalline mineral of the sample before heating is measured in advance by a powder X-ray diffraction method, the sample is heated at 1000°C for 2 hours and then slowly cooled at a cooling speed of 1 to 10°C/min, the main peak area S₀ of the crystalline mineral after heating by the powder X-ray diffraction method is obtained, and further, the vitrification rate χ is calculated by the following formula using the values of S₀ and S. The vitrification rate χ (%) can be obtained by = 100 × (1-S/S₀). The vitrification rate can be adjusted by controlling the cooling speed during heat treatment, melting, and rapid cooling.

The Blaine value of calcium aluminate is 4,500 cm²/g or more, preferably 5,000 to 8,000 cm²/g, and more preferably 5,500 to 7,500 cm²/g. When the Blaine value is less than 4,500 cm²/g, the initial compression strength decreases.

Note that, in the present description, the Blaine value is measured based on a specific surface area test described in JIS R 5201 "Physical test method of cement".

An example of calcium aluminate is a compound having CaO and Al₂O₃ as the main components as the chemical composition and exhibiting a hydraulic property, but can be a compound in which a part of CaO and/or Al₂O₃ is substituted with a substance such as alkali metal oxides, alkaline-earth metal oxides, silicone oxides, titanium oxides, iron oxides, alkali metal halogen compounds, alkaline-earth metal halogen compounds, alkali metal sulfates, and alkaline-earth metal sulfates, or a compound in which a small amount of the above components is solid-solved.

The calcium aluminate as described above is contained in the powder quick-setting agent in an amount of 40% by mass or more, preferably 50% by mass or more, and more preferably 60% by mass or more. When the calcium aluminate is less than 40% by mass, the adhesion strength decreases. The calcium aluminate in the powder quick-setting agent is preferably 80 mass% or less.

### (Aluminum Sulfate)

In the present embodiment, the powder quick-setting agent contains 3 to 12.5% by mass of aluminum sulfate having a hydration number of 14 to 18.

When the hydration number of the aluminum sulfate is less than 14, the strength expression property after 1 day of material age is decreased, and when it exceeds 18, the storage property of the powder quick-setting agent is decreased.

The aluminum sulfate as described above is contained in the powder quick-setting agent in an amount of 3 to 12.5% by mass, preferably 4 to 10% by mass, and more preferably 5 to 10% by mass. When the aluminum sulfate is less than 3% by mass, the initial strength decreases, and when it exceeds 12.5, the strength at a material age of 1 day and the adhesion strength are decreased.

### (Citric Acid)

In the present embodiment, the powder quick-setting agent contains 0.1 to 1.5% by mass of citric acid. When the citric acid is less than 0.1% by mass, the strength at a material age of 10 minutes decreases, and when it exceeds 1.5% by mass, a delayed tendency is exhibited. The citric acid is preferably 0.2 to 1.2% by mass, and more preferably 0.3 to 1.0% by mass. As citric acid, anhydrous citric acid is preferable from the viewpoint of storage stability.

In the present embodiment, the mass ratio of calcium aluminate to citric acid (calcium aluminate/citric acid) is preferably 25 to 500, and more preferably 40 to 400, from the viewpoint of enhancing the strength expression property at the very initial stage and the adhesive strength.

In addition, the mass ratio of aluminum sulfate to citric acid (calcium aluminate/citric acid) is preferably 5 to 150, and more preferably 7 to 80, from the viewpoint of strength expression property at the very initial stage.

Furthermore, from the viewpoint of more favorably exhibiting the combined effect of calcium aluminate, aluminum sulfate, and citric acid, the mass ratio thereof (citric acid/(calcium aluminate + aluminum sulfate)) is preferably 0.002 to 0.031, and more preferably 0.004 to 0.021.

### (Calcium Sulfate)

In the present embodiment, calcium sulfate is further contained in an amount of preferably 20% by mass or more, and more preferably 20 to 50% by mass. When the calcium sulfate is contained in an amount of 20% by mass or more, the long-term strength expression property can be enhanced. It is preferable that the calcium aluminate, the aluminum sulfate, and the citric acid are contained in the predetermined amounts described above, and the residual part is calcium sulfate.

The Blaine value of calcium sulfate is preferably 4000 cm²/g or more, and more preferably 4,000 to 8,000 cm²/g. When the Blaine value is 4000 cm²/g or more, the long-term strength expression property can be enhanced.

In the present embodiment, sodium aluminate is not substantially contained. "no... substantially contained/included", "...not substantially contained/included", "not substantially contain/include...", "contain(s)/include(s) substantially no...", or "containing/including substantially no..." means that it is not confirmed by XRD. When the sodium aluminate is not substantially contained, the workability in the spraying treatment can be improved.

Note that it is represented by NaAlO₂ or Na[Al(OH)₄]. That is, the sodium aluminate refers to aluminum sodium dioxide and sodium tetrahydroxido aluminate.

The powder quick-setting agent according to the present embodiment is preferably used together with an acidic liquid quick-setting agent. Since the acidic liquid quick-setting agent is more excellent in handleability than the alkaline liquid quick-setting agent, the workability of the spraying treatment can be further enhanced.

As the acidic liquid quick-setting agent, from the viewpoint of obtaining a synergistic effect with the powder quick-setting agent according to the present embodiment, it is preferable to use a liquid quick-setting agent described below.

### [Slurry Quick-Setting Agent]

The slurry quick-setting agent according to the present embodiment is obtained by combining a liquid quick-setting agent exhibiting pH 1 to 4 and containing aluminum sulfate as a main component with the powder quick-setting agent of the present embodiment described above.

Here, since the powder quick-setting agent of the present embodiment contains substantially no sodium aluminate, even when combined with a liquid quick-setting agent exhibiting a pH 1 to 4, the pH after combined is stable, control of the time until it is blended into concrete is unnecessary, and stable adhesion properties of concrete can be obtained.

By containing aluminum sulfate as a main component, the liquid quick-setting agent is less likely to be alkaline, and as a result, the handleability and the environmental load reducing property can be improved while maintaining a good quick-setting property.

Here, "containing aluminum sulfate as a main component" means that the content (based on mass) of aluminum sulfate is the largest in the quick-setting agent component of the liquid quick-setting agent, and is preferably 50% by mass or more, more preferably 80% by mass or more, and still more preferably 90% by mass or more, in the quick-setting agent component, and in particular, the quick-setting agent component is preferably only aluminum sulfate.

The pH of the liquid quick-setting agent is preferably less than 7, and more preferably 5 or less. When the pH is less than 7, an environmental load reducing effect can be exhibited. The pH is preferably 2 or more.

The liquid quick-setting agent preferably contains 20 to 40% by mass, more preferably 25 to 30% by mass, of aluminum sulfate. In particular, when aluminum sulfate is contained in an amount of 25 to 30% by mass, the handleability and the environmental load reducing property can be improved while maintaining a good quick-setting property. Note that water can be used as the liquid component for dissolving or dispersing aluminum sulfate. In addition, a part of aluminum sulfate can be present as a solid content.

The slurry quick-setting agent according to the present embodiment is preferably alkali-free from the viewpoint of workability. Here, "alkali-free" means that the content of R₂O (R is an alkali metal, and when a plurality of R's are present, all of them) in the slurry quick-setting agent is 1.0% by mass or less, more specifically 0.5% by mass or less.

When the content of R₂O is 1.0% by mass or less, the handleability and the environmental load reducing property can be improved, and the workability can be further improved. The content of R₂O in the powder auxiliary agent can be measured by atomic absorption analysis.

The powder quick-setting agent and the liquid quick-setting agent constituting the slurry quick-setting agent according to the present embodiment can contain various additives such as a pH adjuster, a dispersant, a stabilizer, an anti-freezing agent, a water soluble promoter, an AE agent, a water reducing agent, an AE water reducing agent, a thickening agent, a fiber, and a fine powder, in addition to the above-described components, within a range not inhibiting the effect of the present invention.

### [Spraying Material and Spraying Method]

The spraying material according to the present embodiment is (1) a spraying material obtained by using the slurry quick-setting agent of the present embodiment together with cement, in which the liquid quick-setting agent is 4 parts by mass or more with respect to 100 parts by mass of cement, or (2) a spraying material obtained by using the slurry quick-setting agent of the present embodiment together with cement, in which the powder quick-setting agent is 4 parts by mass or more with respect to 100 parts by mass of cement. In particular, (3) a spraying material obtained by using the slurry quick-setting agent of the present embodiment together with cement, in which the liquid quick-setting agent is 4 parts by mass or more with respect to 100 parts by mass of cement, and the powder quick-setting agent is 4 parts by mass or more with respect to 100 parts by mass of cement is preferable.

By using such a spraying material, it is possible to impart stable adhesion properties with little variation in the adhesion properties due to the addition rate and temperature.

In the case of the above (1) and (3), the liquid quick-setting agent is more preferably 6 parts by mass or more, and further preferably 7 to 10 parts by mass, with respect to 100 parts by mass of the cement, and in the case of the above (2) and (3), the powder quick-setting agent is more preferably 10 parts by mass or more, and further preferably 11 to 20 parts by mass, with respect to 100 parts by mass of the cement.

Examples of the cement include various Portland cements such as ordinary, rapid hardening, extra rapid hardening, low heat, and moderate heat Portland cement, various mixed cement obtained by mixing these Portland cement with blast furnace slag, fly ash, or silica, filler cement obtained by mixing lime stone powder or the like or blast-furnace slow-cooled slag fine powder, environment-conscious type cement produced using various industrial waste as a main raw material, so-called eco-cement, and the like, and one or two or more kinds thereof among these can be used in combination.

The spraying material is practically used as cement concrete by further mixing aggregate and the like, but the aggregate is not particularly limited, and those having a low water absorption rate and a high aggregate strength are preferred. The maximum size of the aggregate is not particularly limited as long as the aggregate can be sprayed. As the fine aggregate, river sand, mountain sand, sea sand, limestone sand, silica sand, and the like can be used, and as the coarse aggregate, river gravel, pit gravel, limestone gravel, and the like can be used, and crushed sand and crushed stone can also be used.

Here, the cement concrete refers to mortar, concrete, and the like.

The spraying method according to the present embodiment is a method of performing a spraying treatment using the spraying material according to the present embodiment. According to such a spraying method, spraying can be performed by either a dry method or a wet method.

Specifically, it is a method of performing a treatment in which a liquid quick-setting agent, a powder quick-setting agent and cement concrete are mixed and sprayed. The powder quick-setting agent and the liquid quick-setting agent are preferably joined and mixed together in a mixing tube to form a slurry immediately before being added to the cement concrete, from the viewpoint of improving the mixing property with the cement concrete to be sprayed. Note that the water/cement ratio is preferably 65% or less.

In the spraying treatment, usually, the spraying pressure is preferably 0.2 to 0.5 MPa, and the spraying speed is preferably 4 to 20 m³/h.

### Examples

### [Experimental Example 1]

### (Powder Quick-Setting Agent)

Calcium aluminate, calcium sulfate, citric acid, and aluminum sulfate were mixed in a mass ratio shown in Table 2 to prepare powder quick-setting agents.

Note that the materials used are as follows. In addition, the content of sodium aluminate in any of the powder quick-setting agents was 0% by mass.

### <Material Used>

· Calcium aluminate: obtained by rapidly cooling a heat-treated product having a CaO/Al₂O₃ molar ratio equivalent to 2.5, vitrification rate 90% and Blaine value 5,900 cm²/g, and containing 3 parts by mass of SiO₂ in terms of oxide
· Aluminum sulfate: hydration number 14 to 18, powder form, reagent · Citric acid: anhydrate, powder form
· Calcium sulfate: anhydrous, Blaine 5,000 cm²/g, natural gypsum

Under the concrete blending conditions shown in Table 1, mortar except for the coarse aggregate was quantitatively conveyed to the quick-setting agent mixing part under the pump discharge condition of 4 m³/Hr, a liquid quick-setting agent A was pumped by a metering pump at a weight ratio of 7% with respect to the cement and continuously compressed-air conveyed from one side, a powder quick-setting agent having the composition shown in Table 2 was quantitatively and continuously compressed-air conveyed at a mass ratio of 10 parts with respect to 100 parts of cement, the liquid and the powder were joined to obtain a slurry quick-setting agent before the mortar was joined, and then the mortar was mixed and joined to prepare a quick-setting mortar, and the evaluation of the strength expression property when it was sprayed from the spraying part was performed.

Note that the content of R₂O (R is an alkali metal) in each slurry quick-setting agent was 0 % by mass.

### <Material Used>

· Liquid quick-setting agent A: aluminum sulfate with special reagent grade was dissolved in pure water and adjusted to a concentration of 27% by mass, pH 2.0
· Ordinary cement: commercial product, Blaine value 3,200 cm²/g, density 3.15 · Fine aggregate: Himekawa River water system sand, Itoigawa City, Niigata Prefecture, maximum size 5 mm or less, density 2.62
· Coarse aggregate: Itoigawa No. 6 crushed stone, Niigata Prefecture, maximum size 15 mm, density 2.67
· Water: tap water
Water reducing agent: commercial product, high-performance water reducing agent

**[Table 1]**

| W/C (%) | s/a (%) | Unit Amount (kg/m³) | | | | Water Reducing Agent (% with respect to Cement) |
|---|---|---|---|---|---|---|
| | | Water | Cement | Fine Aggregate | Coarse Aggregate | |
| 50 | 62 | 210 | 420 | 1066 | 668 | 0.6 |

| | | | | | | |
|---|---|---|---|---|---|---|
| * Adjusted to Slump of 19 cm | | | | | | |

### <Evaluation>

· Evaluation of strength expression property: the quick-setting mortar was sprayed to a 3 gang mortar mold with 4 × 4 × 16 cm to prepare a specimen, and the compression strength value was measured for each material age after spraying. The material ages were 10 minutes, 3 hours, 1 day, and 28 days.
· Adhesion strength: Concrete containing no powder quick-setting agent and having the blending conditions shown in Table 1 was placed in a mold having a thickness of 20 cm × a length of 40 cm × a width of 40 cm, and cured in air for 28 days of the material age. Concrete containing each powder quick-setting agent was sprayed on the surface of the concrete so as to have the thickness of about 10 cm, and after curing in air for 28 days of the material age, the adhesion strength was measured with a Kenken type (Building Research Institute type) adhesion tester. The drawing diameter was 10 cm.

The adhesion strength is acceptable when it is 0.5 N or more, preferably 0.7 N or more, and more preferably 1.0 N or more.

**[Table 2]**

| No. | Powder Quick-Setting Agent Composition (% by mass) | | | | | Compression Strength Value (N/mm²) | | | | Adhesion Strength (N) | Remarks |
|---|---|---|---|---|---|---|---|---|---|---|---|
| | Calcium Aluminate CA | Aluminum Sulfate AS | Citric Acid cit | CA/ cit | AS/ cit | 10 minutes | 3 hours | 1 day | 28 days | | |
| 1-1 | | | 0 | - | - | 1.7 | 4.8 | 12.1 | 38.8 | 0.4 | Comparative Example |
| 1-2 | | | 0.05 | 800 | 160 | 1.9 | 5.1 | 12.8 | 39.0 | 0.5 | Comparative Example |
| 1-3 | | | 0.1 | 400 | 80 | 2.1 | 5.4 | 15.6 | 39.6 | 0.8 | Example |
| 1-4 | | | 0.2 | 200 | 40 | 2.2 | 5.8 | 16.8 | 40.0 | 0.9 | Example |
| 1-5 | | | 0.3 | 133 | 27 | 2.2 | 6.0 | 17.3 | 40.3 | 1.0 | Example |
| 1-6 | | 8 | 0.5 | 80 | 16 | 2.4 | 6.2 | 17.6 | 40.5 | 1.1 | Example |
| 1-7 | | | 0.7 | 57 | 11 | 2.0 | 6.7 | 18.0 | 40.1 | 1.2 | Example |
| 1-8 | | | 1.0 | 40 | 8 | 2.0 | 7.8 | 18.2 | 42.1 | 1.3 | Example |
| 1-9 | | | 1.2 | 33 | 7 | 1.9 | 8.2 | 18.5 | 43.0 | 1.3 | Example |
| 1-10 | 40 | | 1.5 | 27 | 5 | 1.9 | 8.2 | 18.4 | 42.6 | 1.3 | Example |
| 1-11 | | | 1.7 | 24 | 5 | 1.1 | 8.2 | 18.5 | 43.0 | 0.7 | Comparative Example |
| 1-12 | | 2 | | 80 | 4 | 0.9 | 4.1 | 20.1 | 40.0 | 0.7 | Comparative Example |
| 1-13 | | 3 | | 80 | 6 | 1.9 | 5.5 | 19.4 | 40.0 | 0.9 | Example |
| 1-14 | | 4 | | 80 | 8 | 2.0 | 5.6 | 17.9 | 40.0 | 1.0 | Example |
| 1-15 | | 5 | | 80 | 10 | 2.0 | 5.7 | 16.5 | 40.2 | 1.0 | Example |
| 1-16 | | 10 | | 80 | 20 | 2.2 | 5.8 | 14.5 | 40.4 | 1.1 | Example |
| 1-17 | | 12.5 | 0.5 | 80 | 25 | 2.5 | 6.0 | 14.1 | 41.0 | 1.0 | Example |
| 1-18 | | 13 | | 80 | 26 | 2.6 | 6.0 | 9.4 | 40.2 | 0.5 | Comparative Example |
| 1-19 | 35 | 8 | | 70 | 16 | 1.4 | 7.5 | 20.4 | 44.5 | 0.5 | Comparative Example |
| 1-20 | 50 | | | 100 | 16 | 2.5 | 6.0 | 15.5 | 38.5 | 1.0 | Example |
| 1-21 | 60 | | | 120 | 16 | 2.6 | 6.2 | 15.2 | 37.8 | 1.0 | Example |
| 1-22 | 90 | | | 180 | 16 | 3.0 | 6.1 | 14.5 | 36.5 | 1.1 | Example |
| 1-23 | 100 | 0 | 0 | - | - | 1.9 | 5.8 | 6.7 | 33.0 | 0.5 | Comparative Example |

| | | | | | | | | | | | |
|---|---|---|---|---|---|---|---|---|---|---|---|
| *Residual Part of Powder Quick-Setting Agent Composition (%) is Calcium Sulfate | | | | | | | | | | | |

From the results shown in Table 2, when the blending amount of citric acid in the powder quick-setting agent was increased or decreased, in the case where the amount was less than 0.1% by mass, the strength expression properties up to 1 day were low, and in particular, the growth of the strength at 1 day shifted to be small, and in the case where the amount exceeded 1.5% by mass, the strength expression properties up to 10 minutes showed a tendency of decrease. Therefore, the amount of citric acid is preferably 0.1 to 1.5% by mass in the powder quick-setting agent composition. When the blending amount of aluminum sulfate was increased or decreased, in the case where the amount was less than 3% by mass, the strength expression properties at 10 minute were low, and in the case where the amount exceeded 12.5% by mass, the strength at 1 day shifted to be low. Therefore, aluminum sulfate is preferably 3 to 12.5% by mass. When the amount of calcium aluminate is less than 40% by mass, the strength expression properties up to 10 minutes show a tendency of decrease, and when aluminum sulfate or citric acid is not completely blended, all the strength expression properties from the very initial stage to 28 days tend to decrease. Therefore, the amount of calcium aluminate is preferably 40% by mass or more, and the blending of aluminum sulfate and citric acid is required.

### [Experimental Example 2]

Under the concrete blending conditions shown in Table 1, mortar except for the coarse aggregate was quantitatively conveyed to the quick-setting agent mixing part under the pump discharge condition of 4 m³/Hr, a liquid quick-setting agent having pH shown in Table 3 was pumped by a metering pump at a mass ratio of 7 parts with respect to 100 parts of cement and continuously compressed-air conveyed from one side, a powder quick-setting agent having the composition No. 1-6 shown in Table 2 was quantitatively and continuously compressed- air conveyed at a mass ratio of 10% with respect to the cement, the liquid and the powder were joined to prepare a slurry quick-setting agent before the mortar was joined, the mortar was mixed and joined to prepare a quick-setting mortar, and the evaluation of the strength expression property when it was sprayed from the spraying part was performed. In addition, the evaluation of the adhesion strength was also performed in the same manner as in Experimental Example 1. The results are shown in Table 3.

### <Material Used>

· Liquid quick-setting agent B: sulfuric acid and aluminum oxide were dissolved in pure water to have pH 0.8 and adjusted to a concentration of 27% by mass
· Liquid Quick-setting agent C: sulfuric acid and aluminum oxide were dissolved in pure water to have pH 1.0 and adjusted to a concentration of 27% by mass
· Liquid quick-setting agent D: sulfuric acid and aluminum oxide were dissolved in pure water to have pH 4.0 and adjusted to a concentration of 27% by mass
· Liquid quick-setting agent E: sulfuric acid and aluminum oxide were dissolved in pure water to have pH 5.0 and adjusted to a concentration of 27% by mass

**[Table 3]**

| No. | Type of Liquid Quick-Setting Agent, pH | Compression Strength Value (N/mm²) | | | | Adhesion Strength (N) | Remarks |
|---|---|---|---|---|---|---|---|
| | | 10 minutes | 3 hours | 1 day | 28 days | | |
| 2-1 | B, 0.8 | 1.7 | 4.1 | 19.1 | 43.1 | 1.2 | Example |
| 2-2 | C, 1.0 | 2.3 | 6.0 | 16.4 | 41.2 | 1.2 | Example |
| 1-6 | A, 2.0 | 2.4 | 6.2 | 17.6 | 40.5 | 1.1 | Example |
| 2-3 | D, 4.0 | 2.8 | 7.1 | 14.6 | 37.1 | 0.9 | Example |
| 2-4 | E, 5.0 | 3.0 | 7.5 | 7.8 | 33.5 | 0.8 | Example |

From the results shown in Table 3, when the pH was less than 1.0, the strength expression properties up to 3 hours tended to decrease. When the pH exceeded 4.0, the strength expression properties from 10 minutes to 3 hours tended to increase. However, as a result, the numerical value of the strength at 1 day was hardly different from that of 3 hours. For this reason, the pH of the liquid quick-setting agent is preferably 1 to 4.

### [Experimental Example 3]

Under the concrete blending conditions shown in Table 1, mortar except for the coarse aggregate was quantitatively conveyed to the quick-setting agent mixing part under the pump discharge condition of 4 m³/Hr, a liquid quick-setting agent A was pumped by a metering pump at a mass ratio of 7% with respect to the cement and continuously compressed-air conveyed from one side, a powder quick-setting agent having the composition No. 1-6 shown in Table 2 and in which calcium aluminate having the CaO/Al₂O₃ molar ratio, the vitrification rate, and the Blaine value shown in Table 4 was blended was quantitatively and continuously compressed-air conveyed at a mass ratio of 10% with respect to the cement, the liquid and the powder were joined to prepare a slurry quick-setting agent before the mortar was joined, the mortar was mixed and joined to prepare a quick-setting mortar, and the evaluation of the strength expression property when it was sprayed from the spraying part was performed. In addition, the evaluation of the adhesion strength was also performed in the same manner as in Experimental Example 1.

### <Material Used>

· Calcium aluminate: obtained by rapidly cooling heat-treated products having a CaO/Al₂O₃ molar ratio corresponding to those shown in Table 4, containing 3 parts of SiO₂ in terms of oxide, the vitrification rates shown in Table 4 were calculated by XRD, and the Blaine values shown in Table 4 were adjusted by pulverization treatment with a disk mill after rapid cooling.

**[Table 4]**

| No. | Calcium Aluminate Conditions | | | Compression Strength Value (N/mm²) | | | | Adhesion Strength (N) | Remarks |
|---|---|---|---|---|---|---|---|---|---|
| | CaO/Al₂O₃ Molar Ratio | Vitrification Rate (%) | Blaine Value (cm²/g) | 10 minutes | 3 hours | 1 day | 28 days | | |
| 3-1 | 2.5 | 28 | 5,850 | 0.7 | 4.4 | 15.3 | 39.1 | 0.3 | Comparative Example |
| 3-2 | | 50 | 5,700 | 0.8 | 5.6 | 16.3 | 40.0 | 0.8 | Example |
| 3-3 | | 70 | 5,750 | 2.1 | 6.0 | 17.1 | 40.1 | 0.9 | Example |
| 1-6 | | 90 | 5,900 | 2.4 | 6.2 | 17.6 | 40.5 | 1.1 | Example |
| 3-4 | | 99 | 5,600 | 2.5 | 6.8 | 18.1 | 41.0 | 1.2 | Example |
| 3-5 | 1.5 | 99 | 5,600 | 0.7 | 7.6 | 12.7 | 37.5 | 0.4 | Comparative Example |
| 3-6 | 1.7 | 96 | 5,650 | 2.0 | 7.1 | 15.8 | 39.9 | 0.8 | Example |
| 3-7 | 2.3 | 92 | 5,800 | 2.3 | 6.0 | 17.2 | 40.1 | 0.9 | Example |
| 3-8 | 2.8 | 80 | 6,000 | 2.6 | 5.7 | 16.0 | 39.3 | 1.0 | Example |
| 3-9 | 3.0 | 55 | 7,400 | 2.6 | 5.1 | 15.1 | 38.8 | 1.2 | Example |
| 3-10 | 3.1 | 20 | 7,800 | 2.3 | 4.0 | 12.4 | 37.1 | 0.5 | Comparative Example |
| 3-11 | 2.5 | 90 | 4,000 | 0.5 | 2.9 | 16.5 | 40.1 | 0.5 | Comparative Example |
| 3-12 | | 90 | 4,560 | 1.7 | 4.9 | 17.8 | 39.6 | 0.8 | Example |
| 3-13 | | 90 | 5,300 | 2.2 | 6.0 | 17.3 | 40.9 | 0.9 | Example |
| 3-14 | | 90 | 6,300 | 2.5 | 7.0 | 18.1 | 40.1 | 1.2 | Example |
| 3-15 | | 90 | 7,700 | 2.6 | 7.0 | 18.0 | 40.5 | 1.3 | Example |
| 3-16 | | 90 | 8,500 | 2.3 | 6.2 | 16.7 | 40.0 | 1.3 | Example |

From the results shown in Table 4, it was confirmed that when the vitrification rate of calcium aluminate was less than 30%, the strength expression properties from 10 minutes to 3 hours tended to decrease, and when the vitrification rate was increased, the strength values after 10 minutes tended to increase. Therefore, the vitrification rate needs to be 30% or more. When the CaO/Al₂O₃ molar ratio is less than 1.7, a decrease in strength is observed at all material ages, and when the molar ratio is increased, the initial strength increases. When the molar ratio exceeded 3.0, a decrease in strength was observed after 3 hours or more. Therefore, the molar ratio needs to be 1.7 to 3.0. When the Blaine value is less than 4500 cm²/g, the strength expression property up to 3 hours is extremely decreased, and therefore, the Blaine value needs to be 4500 cm²/g or more.

### Industrial Applicability

The powder quick-setting agent of the present invention can be suitably used in civil engineering and construction fields, particularly as a spraying material for a tunnel and the like.

## Claims

1. A powder quick-setting agent comprising: 40% by mass or more of calcium aluminate having a CaO/Al₂O₃ molar ratio of 1.7 to 3.0, a vitrification rate of 50% or more, and a Blaine value of 4,500 cm²/g or more; 3 to 12.5% by mass of aluminum sulfate having a hydration number of 14 to 18; 0.1 to 1.5% by mass of citric acid; and substantially no sodium aluminate.

2. The powder quick-setting agent according to Claim 1, wherein a mass ratio of the calcium aluminate to the citric acid (calcium aluminate/citric acid) is 25 to 500, and
a mass ratio of the aluminum sulfate to the citric acid (calcium aluminate/citric acid) is 5 to 150.

3. The powder quick-setting agent according to Claim 1, further comprising 20% by mass or more of calcium sulfate.

4. The powder quick-setting agent according to Claim 3, wherein the calcium sulfate has a Blaine value of 4000 cm²/g or more.

5. The powder quick-setting agent according to Claim 1, which is used together with an acidic liquid quick-setting agent.

6. A slurry quick-setting agent obtained by combining a liquid quick-setting agent exhibiting pH 1 to 4 and containing aluminum sulfate as a main component and the powder quick-setting agent according to any one of Claims 1 to 5.

7. The slurry quick-setting agent according to Claim 6, which is alkali-free.

8. A spraying material obtained by using the slurry quick-setting agent according to Claim 6 together with cement,
wherein the liquid quick-setting agent is 4 parts by mass or more with respect to 100 parts by mass of the cement.

9. A spraying material obtained by using the slurry quick-setting agent according to Claim 6 together with cement,
wherein the powder quick-setting agent is 4 parts by mass or more with respect to 100 parts by mass of the cement.

10. The spraying material according to Claim 9, wherein the powder quick-setting agent is 10 parts by mass or more with respect to 100 parts by mass of the cement.

11. A spraying method for performing a spraying treatment using the spraying material according to Claim 8.
